# EUROPEAN PATENT SPECIFICATION

(11) **EP 1 865 686 B1**
(45) Date of publication and mention of the grant of the patent: **23.08.2017**
(21) Application number: 07252228.7
(22) Date of filing: 31.05.2007
(51) Int. Cl.: H04L 29/06, H04L 29/12

(54) **Network device**
Netzwerkvorrichtung
Dispositif de réseau

(30) Priority: 09.06.2006 JP 2006161400; 16.05.2007 JP 2007130538
(43) Date of publication of application: 12.12.2007
(73) Proprietor: Ricoh Company, Ltd., Tokyo 143-8555 (JP)
(72) Inventor: Ohhira, Kohki, Tokyo (JP)
(74) Representative: J A Kemp

(56) References cited:
- EP-A- 1 533 956
- EP-A- 1 562 337
- EP-A2- 0 658 837
- "Using the GUI Tools"[Online] 16 May 2006 (2006-05-16), XP002446781 Retrieved from the Internet: URL:http://web.archive.org/web/20060518030 905/http://aker.alpha.ru/Manual_FW/en50-27 .htm> [retrieved on 2007-08-13]

## Description

The invention relates to a network device which performs an access control to the network device from external devices by means of IP (Internet Protocol) address blocks.

The prior art documents EP 0 658 837 A2, EP 1 562 337 A and EP 1 533 956 A disclose methods for performing access control to a network device from an external device via a network by setting of allowance or denial of access to the network device from a predetermined address.

As for a network device which is connected with two or more external devices via a network, there are the needs to allow or deny access to the network device from predetermined devices in accordance with the operational rule of the organization or the characteristics of the network device. For example, in a case of a company-oriented network printer (network device), there are the needs to accept only printing requests to the network printer from the company section where the network printer is installed, and reject printing requests to the network printer from other company sections.

Various methods for performing such access control have been proposed. A simple, primitive method among them is to specify an IP address of a communication partner and to allow or deny communication of the network device with the external device (the communication partner) of the specified IP address.

Fundamentally, when the access control is performed according to the above method, only the communication of the network device and one external device can be controlled by specifying a single IP address. Therefore, it is common to define a certain range of IP addresses (IP address block) and to control communication of the network device and a plurality of external devices of the defined IP address block. The notation including "/" (slash) is used as a notation of IP address block.

For example, when an IP address block is written as "123.134.145.0/24" in IPv4 (Internet Protocol version 4), it means that the IP addresses the upper 24 bits of which are consistent with the "123.134.145" that are the upper 24 bits of the written IP address are defined. And access allowance or access denial is set up for the group of external devices of the defined IP addresses. Alternatively, the IP address itself may be written instead of the IP address range by including the total bit number of the IP address followed by "/".

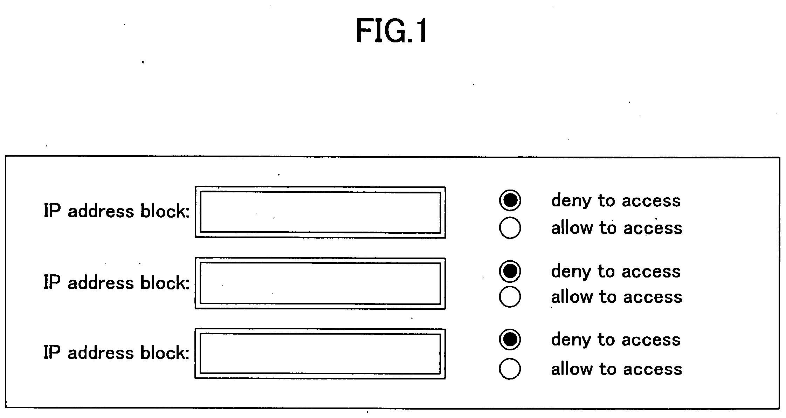

FIG. 1 shows an example of a user interface provided in a conventional network device when the access control is performed by specifying IP address blocks. As shown, the function of requesting the user to input IP address blocks, and the function of requesting the user to choose either access allowance or access denial for each IP address block are provided to a device administrator (user).

Specifically, a value of IP address block is inputted into the input part of "IP address block". When the user wishes to select denial of the communication between the network device and the input IP address block, the switch of "deny to access" is clicked, and when the user wishes to select allowance of the communication between the network device and the input IP address block, the switch of "allow to access" is clicked. In the example of the user interface of FIG. 1, three IP address blocks can be specified for the conventional network device.

In this manner, the device administrator inputs the value of IP address block as the object of the access control, and sets up the choice of communication allowance/denial, so that the access control from external devices to the conventional network device can be performed.

The above method is simple and primitive, and the access control can be performed only by specifying the IP address blocks. This method can be used not only in IPv4 (Internet Protocol version 4) but also in IPv6 (Internet Protocol version 6). There has not been discovered any publication or literature in the art related to this invention by the time of filing of the present application.

However, when it is intended to realize multi-homing state in IPv6 environment, the above-mentioned method of performing the access control using the specification of IP address blocks has the following problem. Multi-homing state is the state in which one network has connectivity with two or more ISPs (Internet Service Providers).

When a certain network gains access to the Internet, it must have the connectivity with a certain ISP. In many cases, for the purpose of safety upon occurrence of a fault of one ISP, one network has the connectivity with two or more ISPs. In such a case, it is necessary to realize multi-homing state.

Supposing the multi-homing environment in which the multi-homing number (the number of ISPs which a certain network has the connectivity with) is denoted by "n", different prefixes for the respective ISPs are transmitted in the network simultaneously, and "n" prefixes are distributed. In this case, "n" global unicast addresses are assigned for respective network devices within the network.

Therefore, when it is intended to allow or deny access to the network device concerned from predetermined network devices or device group in the network, it is necessary for the user to choose either access allowance or access denial for all the IP addresses of "n" kinds corresponding to the "n" different prefixes.

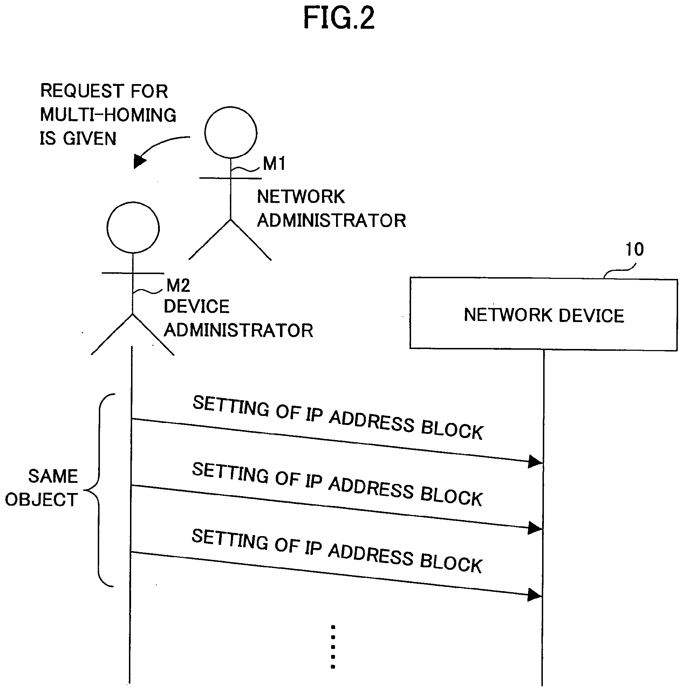

FIG. 2 shows an example of operation of the device administrator when performing the access control by specifying IP address blocks in multi-homing environment.

As shown in FIG. 2, a request for multi-homing environment is notified to the device administrator M2 by the network administrator M1 who grasps the need of multi-homing environment. Subsequently, the device administrator M2 must repeat the setting of IP address block to the network device 10 (the same object) for the multi-homing number "n" (in this example, n=3).

In this manner, the setting operation must be repeated for the number of the IP address blocks multiplied by the multi-homing number "n", and the setting operation becomes complicated, and a setting error is likely to take place.

The setting error may cause accessing the network device concerned from the access-denial device to be permitted wrongly, or cause accessing the network device concerned from the access-allowance device to be inhibited wrongly. For this reason, the setting error will lead to the lowering of security and serviceability.

The storing area for storing the setup information for the access control of the network device 10, such as a network printer, is restricted. The number of objects which can be set up actually is reduced to 1/n (where n is the multi-homing number), and performing the necessary setup operation will be impossible.

Moreover, if the renumbering of prefixes takes place in ISP, the access control setting of all the networks devices in the organization must be changed accordingly.

Moreover, the network administrator M1 grasps a request for multi-homing environment. The setting operation for realizing multi-homing environment is performed only when a request for multi-homing environment is explicitly sent from the network administrator M1 to the device administrator M2. Thus, the access control is almost meaningless if the network administrator M1 fails to send the request to the device administrator M2.

On the other hand, the above-mentioned method of performing the access control using the specification of IP address blocks may be replaced with another method of performing the access control in which the varying part of each prefix is ignored by setting of a bit mask.

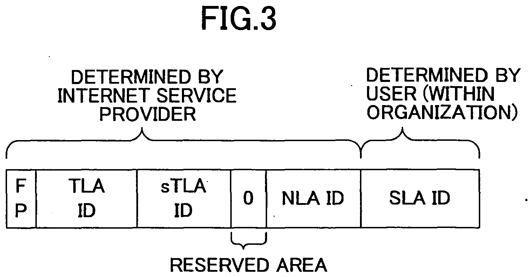

FIG. 3 shows the composition of the prefix of the IPv6 address. The prefix generally consists of 64 bits as the whole. As shown in FIG. 3, the upper 48 bits of the prefix mainly represent FP (format prefix), TLA ID (top level aggregation identifier), sTLA ID (sub top level aggregation identifier) and NLA ID (next level aggregation identifier). And the value of these elements of the prefix is determined by the Internet service provider (ISP) side. The remaining part of the prefix: SLA ID (site level aggregation identifier) may be freely set up by the user (within the organization to which the IP address is assigned). Generally, the SLA ID is determined per each internal section of the organization. Therefore, the SLA ID of the prefix is a user-dependent fixed part of the prefix of the IPv6 address.

On the other hand, the elements of TLA, sTLA, and NLA in the prefix form the varying part of the prefix of the IPv6 address due to the difference of the ISP, and an address portion corresponding to the varying part of the prefix can be ignored by setting of a bit mask.

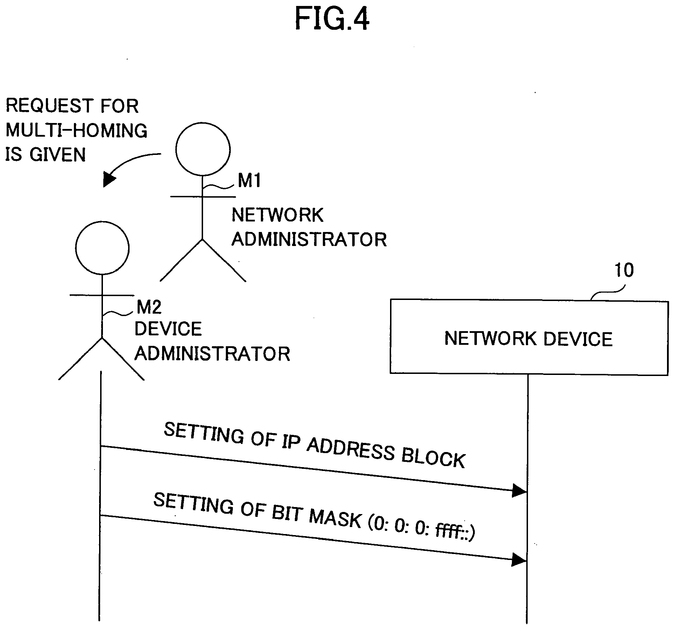

FIG. 4 shows an example of operation of the device administrator when performing the access control by setting of a bit mask.

As shown in FIG. 4, a request for multi-homing environment is notified to the device administrator M2 by the network administrator M1 who grasps the request for multi-homing environment. Subsequently, the device administrator M2 performs the setting of IP address block and the setting of a bit mask to the network device 10. Specifically, an example of the setting of the bit mask is "0:0:0:ffff::". In this example, the 48th to 63rd bits of the prefix are withdrawn from the object of matching.

TLA, sTLA, and NLA which form the varying part of the prefix in the case of multi-homing environment can be ignored and only SLA of the prefix can be made into the object of matching. Thus, it is possible to choose access allowance or denial for the IP address blocks including two or more kinds of prefixes collectively.

However, in the setting of the bit mask, it is not immediately clear which part of the prefix is the target for the bit mask being set. There is a problem in that the time and effort of performing the bit operation are needed for the setting of the bit mask, causing a setting error to occur.

Similar to the previously mentioned method, the network administrator M1 grasps the need of multi-homing environment. The setting operation for realizing multi-homing environment is performed only when a request for multi-homing environment is explicitly sent to the device administrator M2 from the network administrator M1. Thus, the access control is almost meaningless if the network administrator M1 fails to send the request to the device administrator M2.

Moreover, apart from the above-mentioned multi-homing environment, there is also the case (multi-prefix environment) in which different prefixes for the respective ISPs are transmitted in the network of an organization simultaneously, and "n" prefixes are distributed. And, in such a case, the same problem remains unresolved.

The scope of the invention is defined by the appended claims.

According to the invention, there is provided an improved network device in which the above-described problems are eliminated.

According the invention there is provided a network device which is adapted to perform the access control from the external devices to the network device only by specifying a minimized number of IP address blocks, and to perform appropriate setup of the network device without being affected by artificial recognition of multi-prefix environment.

Other objects, features and advantages of the present invention will be apparent from the following detailed description and the accompanying drawings, in which:
Fig. 1 is diagram showing an example filtering unit determining allowance or denial of reception of an incoming packet according to the choice inputted by a user through the user interface.

In an embodiment of the invention which solves or reduces one or more of the above-mentioned problems, there is provided a network device which performs an access control to the network device from an external device via a network by setting of allowance or denial of access to the network device from a predetermined address, the network device comprising: a user-interface unit creating a user interface including an address input part to which an address portion corresponding to a user-dependent fixed part of a prefix received from the network is inputted, and an allow/deny selection part to which a choice of whether access to the network device from an external device, corresponding to the address portion inputted to the address input part, is allowed or denied is inputted; and a packet-filtering unit determining allowance or denial of reception of an incoming packet according to the choice inputted by a user through the user interface.

The above-mentioned network device may be configured to further comprise a multi-prefix environment recognition unit detecting whether the network device is in a multi-prefix environment, wherein the user-interface unit is configured to set the switch part of the user interface in a valid state or in an invalid state based on a result of the detection by the multi-prefix environment recognition unit.

The above-mentioned network device may be configured so that the multi-prefix environment recognition unit is configured to monitor a router advertisement received from the network, and detect that the network device is in a multi-prefix environment when a plurality of prefixes are contained in the received router advertisement.

The above-mentioned network device may be configured so that the multi-prefix environment recognition unit is configured to hold and manage a plurality of prefixes in the received router advertisement on the basis of a pair of a prefix item and a time of arrival thereof, and discard an old prefix item exceeding a given time limit in the plurality of prefixes.

The above-mentioned network device may be configured so that the multi-prefix environment recognition unit is configured to return the number of entries of currently held prefixes in response to a confirmation request from the user-interface unit.

The above-mentioned network device may be configured so that the user-interface unit is configured to set the switch part of the user interface in the valid state when the address inputted by the user is a global unicast address and the network device is in a multi-prefix environment.

The above-mentioned network device may be configured so that the user-interface unit is configured to give the user a warning indicating that an unsuitable setup is performed by the user, when the choice to ignore the address portion corresponding to the varying part of the prefix received from the network is inputted but the address inputted by the user is not a global unicast address.

The above-mentioned network device may be configured so that the user-interface unit is configured to determine whether the address inputted by the user is a global unicast address, based on a value of predetermined bits at a head end of the address.

The above-mentioned network device may be configured so that the user-interface unit is configured to determine whether the address inputted by the user is a global unicast address, depending on whether the input address is within a range of a predetermined address block.

In an embodiment of the invention which solves or reduces one or more of the above-mentioned problems, there is provided an access control method which performs an access control to a network device from an external device via a network by setting of allowance or denial of access to the network device from a predetermined address, the method comprising steps of: creating a user interface including an address input part to which an address or an address range is inputted, an allow/deny selection part to which a choice of whether access to the network device from an external device, corresponding to the address or the address range inputted to the address input part, is allowed or denied is inputted, and a switch part to which a choice of whether an address portion corresponding to a varying part of a prefix received from the network is ignored is inputted; and determining allowance or denial of reception of an incoming packet according to the choice inputted by a user through the user interface.

In an embodiment of the invention which solves or reduces one or more of the above-mentioned problems, there is provided an access control method which performs an access control to a network device from an external device via a network by setting of allowance or denial of access to the network device from a predetermined address, the method comprising steps of: creating a user interface including an address input part to which an address portion corresponding to a user-dependent fixed part of a prefix received from the network is inputted, and an allow/deny selection part to which a choice of whether access to the network device from an external device, corresponding to the address portion inputted to the address input part, is allowed or denied is inputted; and determining allowance or denial of reception of an incoming packet according to the choice inputted by a user through the user interface.

According to embodiments of the network device of the invention, the current condition of the network is multi-homing environment is automatically detected, and the user interface containing the input part as to whether a varying part of the address influenced by the multi-homing environment is ignored is created. It is possible to perform the access control from the external devices to the network device only by specifying a minimized number of IP address blocks. And it is possible to perform appropriate setup of the network device without being affected by artificial recognition of multi-prefix environment.

Other objects, features and advantages of the present invention will be apparent from the following detailed description of exemplary when reading embodiments and with the accompanying drawings, in which:
Fig. 1 is a diagram showing an example of a user interface provided in a conventional network device when the access control is performed by specifying IP address blocks.
FIG. 2 is a sequence diagram showing an example of operation of the device administrator when performing the access control by specifying IP address blocks in multi-homing environment.
FIG. 3 is a diagram showing the composition of the prefix of the IPv6 address.
FIG. 4 is a sequence diagram showing an example of operation of the device administrator when performing the access control by setting a bit mask.
FIG. 5 is a block diagram showing the composition of a network device in an embodiment of the invention.
FIG. 6 is a sequence diagram for explaining the processing of access control setup performed by a device administrator.
FIG. 7 is a flowchart for explaining the processing performed by a multi-homing environment automatic recognition unit of this embodiment.
FIG. 8 is a flowchart for explaining the processing of switch control performed by an access control user-interface unit of this embodiment.
FIG. 9 is a diagram showing an example of a user interface.
FIG. 10 is a diagram showing an example of the setup information stored.
FIG. 11 is a flowchart for explaining the processing performed by a packet-filtering unit of this embodiment.
FIG. 12 is a diagram showing an example of a user interface when the switch control is not performed.
FIG. 13 is a flowchart for explaining the processing to give a warning to a user who has inputted unsuitable setup information.
FIG. 14 is a diagram showing an example of a warning message.
FIG. 15 is a diagram showing an example of the user interface when SLA ID is directly set up.
FIG. 16 is a diagram showing an example of the setup information stored.
FIG. 17 is a flowchart for explaining the processing performed by the packet-filtering unit when SLA ID is directly set up.
FIG. 18 is a diagram showing the composition of a network device in an embodiment of the invention.
FIG. 19A and FIG. 19B are flowcharts for explaining the processing performed by a multi-prefix environment automatic recognition unit of this embodiment.
FIG. 20 is a flowchart for explaining the processing of switch control performed by an access control user-interface unit of this embodiment.

A description will be given of embodiments of the invention with reference to the accompanying drawings.

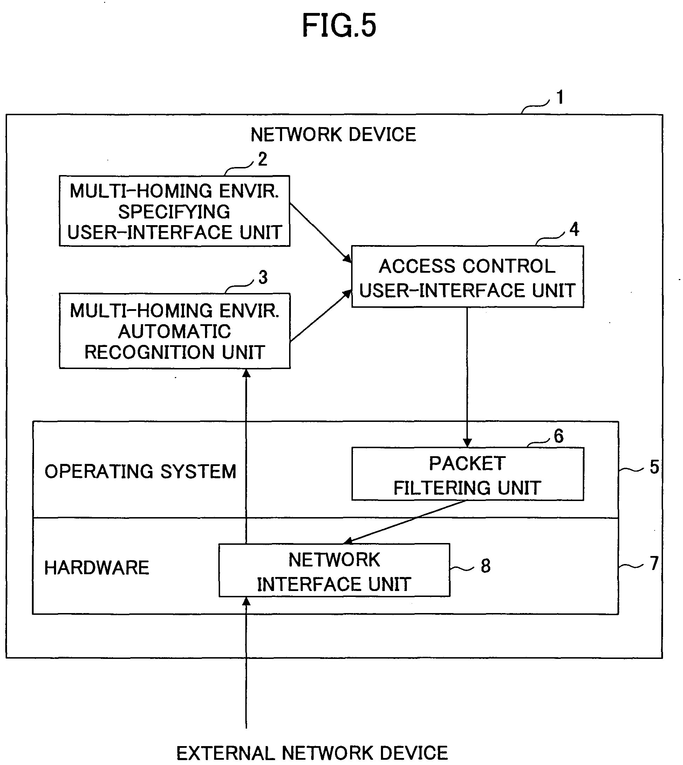

FIG. 5 shows the composition of a network device in an embodiment of the invention. As shown in FIG. 5, the network device 1 includes the following elements. A multi-homing environment specifying user-interface unit 2 is provided to receive a manually input command to set the current condition of the network device is in a multi-homing environment or not.

A multi-homing environment automatic recognition unit 3 is provided to automatically detect whether the current condition of the network device is in a multi-homing environment or not.

An access control user-interface unit 4 is provided to create a user interface for the access control according to the recognized environment (multi-homing environment/non-multi-homing environment) from the multi-homing environment specifying user-interface unit 2 or the multi-homing environment automatic recognition unit 3.

An operating system (OS) 5 of the network device 1 includes a packet-filtering unit 6 which filters the incoming IP packet from an external network device according to the information which is set up by the user through the user interface created by the access control user-interface unit 4.

Hardware 7 of the network device 1 includes a network interface part 8 which performs reception of the IP packet under the control of the packet-filtering unit 6. The packet received by the network interface part 8 is supplied to the multi-homing environment automatic recognition unit 3, in order to detect whether the current condition of the network device is in a multi-homing environment.

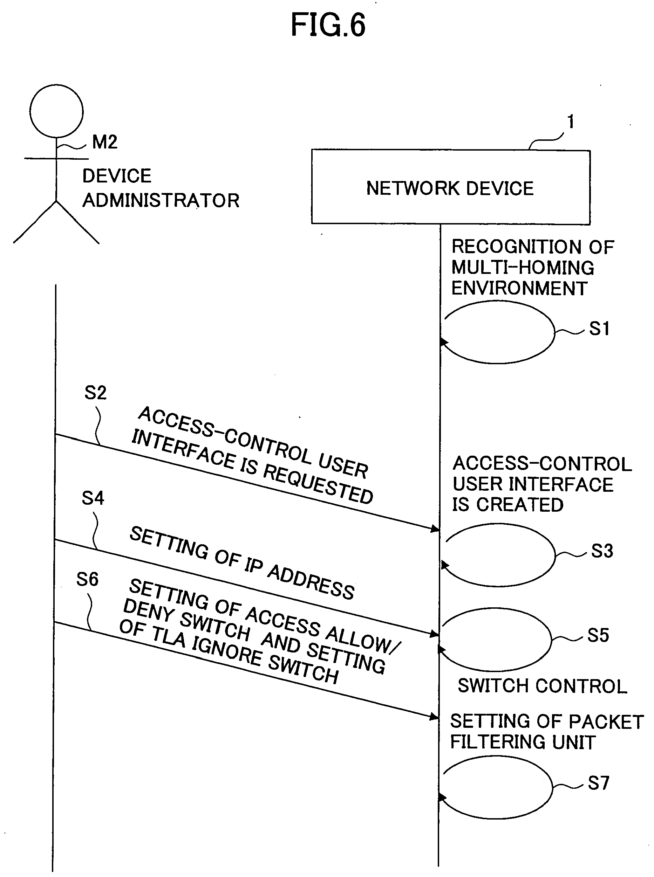

FIG. 6 is a sequence diagram for explaining the processing of access control setup performed by a device administrator.

As shown in FIG. 6, the network device 1 recognizes whether the current condition of the network device is in a multi-homing environment by using the multi-homing environment specifying user-interface unit 2 or the multi-homing environment automatic recognition unit 3 (step S1).

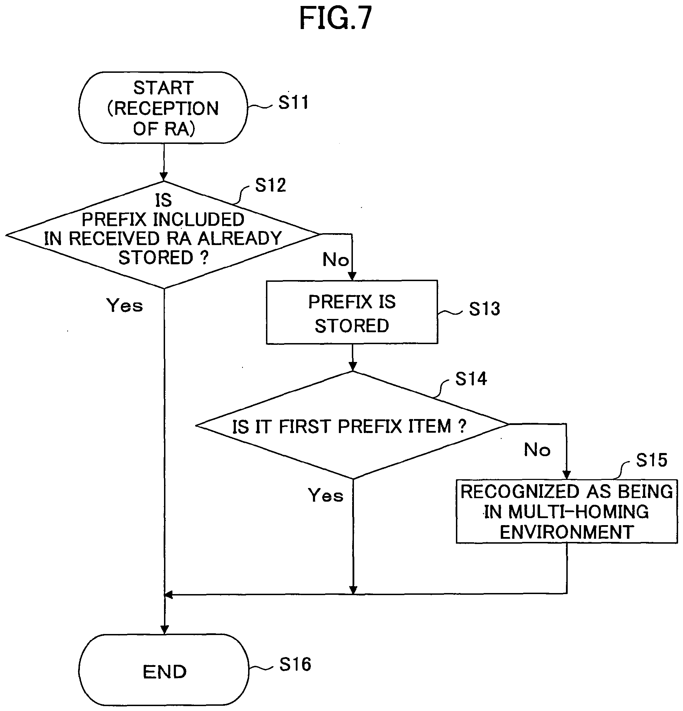

FIG. 7 is a flowchart for explaining the processing performed by the multi-homing environment automatic recognition unit 3 of this embodiment. The processing shown in FIG. 7 is started when the multi-homing environment automatic recognition unit 3 of the network device 1 receives a router advertisement (RA) from the network via the network interface part 8 (step S11)

Upon start of the processing of FIG. 7, the multi-homing environment automatic recognition unit 3 determines whether a prefix included in the received RA is already stored (step S12).

When the prefix is already stored (Yes of step S12), the processing is terminated (step S16). On the other hand, when the prefix is not yet stored (No of step S12), the prefix is stored (step S13). And the multi-homing environment automatic recognition unit 3 determines whether the prefix is a first prefix item being stored (step S14).

When it is determined that it is the first prefix item (Yes of step S14), the processing of FIG. 7 is terminated (step S16).

On the other hand, when it is determined that it is not the first prefix item (No of step S14), this shows that a plurality of prefixes are transmitted over the network. In this case, the multi-homing environment automatic recognition unit 3 determines that the current condition of the network device 1 is in a multi-homing environment (step S15). Subsequently, the processing of FIG. 7 is terminated (step S16).

Referring back to FIG. 6, the device administrator M2 requests the network device 1 to provide a user interface for the access control (step S2). In response to this request, the access control user-interface unit 4 of the network device 1 creates an access-control user interface (step S3).

Subsequently, the device administrator M2 sets up IP address block by using the created user interface (step S4). At this time, the access control user-interface unit 4 of the network device 1 controls the switch of whether TLA, sTLA, and NLA are ignored according to the user-input address format (step S5).

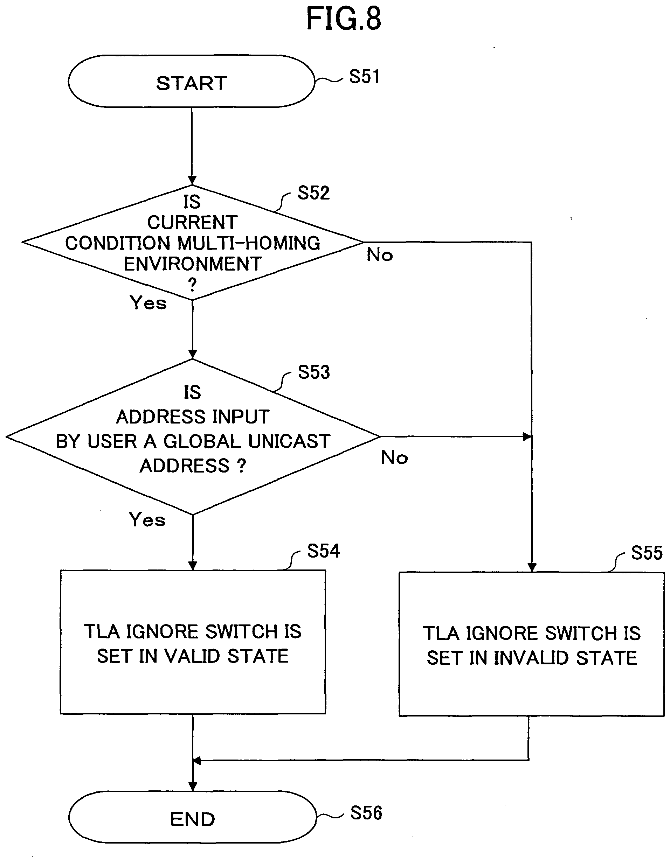

FIG. 8 is a flowchart for explaining the processing of switch control performed by the access control user-interface unit 4 of this embodiment. The processing shown in FIG. 8 is started when the access control user-interface unit 4 receives any input operation to the user interface (character input, button selection, etc.) or focus movement (selecting part movement) being performed as a start trigger (step S51).

Upon start of the processing of FIG. 8, the access control user-interface unit 4 determines whether the current condition of the network device is in a multi-homing environment (step S52).

When the current condition is determined as being in a multi-homing environment (Yes of step S52), the access control user-interface unit 4 determines whether the address inputted by the user (which is inclusive of an IP address block including "/") is a global unicast address (step S53). Whether the user-input address is a global unicast address is determined based on the value of predetermined bits (FP) at the head end of the address.

When the user-input address is determined as being a global unicast address (Yes of step S53), the access control user-interface unit 4 sets the TLA ignore switches to ignore the TLA, sTLA, and NLA of the user interface in a valid state (step S54). And the processing of FIG. 8 is terminated (step S56).

When it is determined that the current condition is not in a multi-homing environment (No of step S52) or when the user-input address is determined as being not a global unicast address (No of step S53), the access control user-interface unit 4 sets the TLA ignore switches to ignore TLA, sTLA, and NLA of the user interface in an invalid state (step S55). And the processing of FIG. 8 is terminated (step S56) .

Referring back to FIG. 6, the device administrator M2 performs setting of the TLA ignore switches and setting of the access allow/deny switches by using the user interface (step S6).

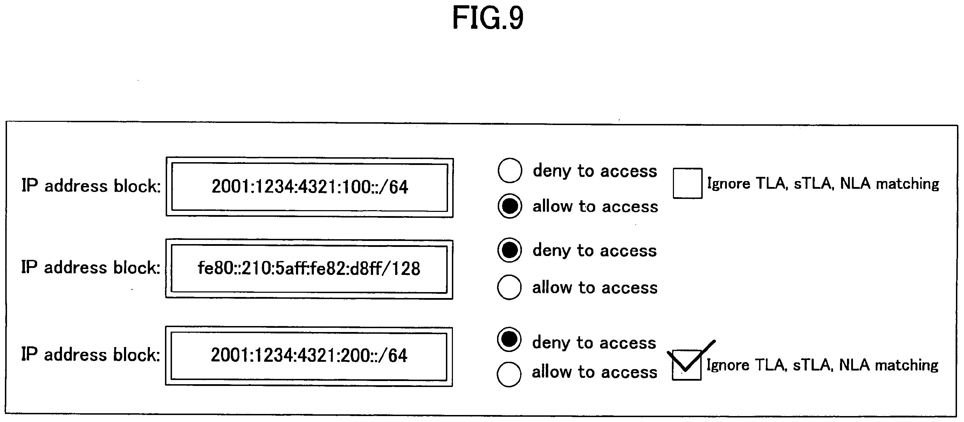

FIG. 9 shows an example of a user interface according to this embodiment. The user interface of FIG. 9 is adapted for enabling the user to set up three IP address blocks at the top, middle and bottom rows.

In the example of FIG. 9, the user-input IP address blocks at the top and bottom rows are a global unicast address. At these rows of the user interface, both the TLA ignore switches (to ignore TLA, sTLA, NLA matching) to which a choice of whether an address portion corresponding to the TLA ID, sTLA ID, and NLA ID of the prefix is ignored or not is inputted, and the access allow/deny switches (deny to access/allow to access) to which a choice of whether access from the IP address group is allowed or denied is inputted are displayed.

On the other hand, the user-input IP address block at the middle row in the example of FIG. 9 is not a global unicast address. At this row of the user interface, only the access allow/deny switches are displayed and the TLA ignore switch is not displayed. Therefore, it is possible to prevent the user from incorrectly checking the TLA ignore switch of the user interface when the user-input address is not a global unicast address. And it is possible to prevent the security from being lowered due to a setting error by the user.

In the above embodiment, displaying the TLA ignore switches in the user interface is avoided when the user-input address is not a global unicast address. Alternatively, the TLA ignore switches in the user interface may be displayed in a dim state the luminance of which is lower than that of other display portions.

Referring back to FIG. 6, when the setting of the switches using the user interface is completed, the access control user-interface unit 4 of the network device 1 stores the setup information, and performs the setting of the packet-filtering unit 6 (step S7).

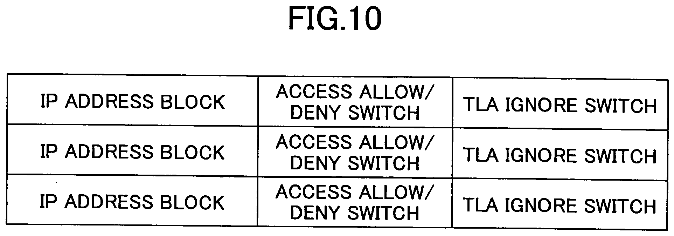

FIG. 10 shows an example of the setup information stored. As shown in FIG. 10, the setup information stored in the network device 1 includes the IP address block, the access allow/deny switch (1 bit), and the TLA ignore switch (1 bit).

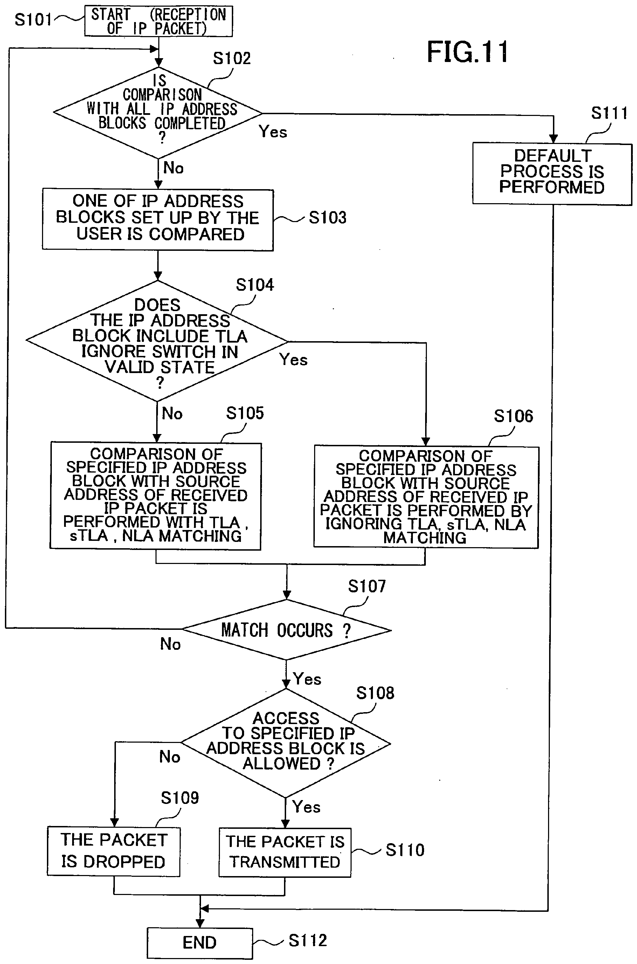

FIG. 11 is a flowchart for explaining the processing performed by the packet-filtering unit 6 of this embodiment after the setup information for the access control is stored.

As shown in FIG. 11, the processing is started upon reception of an IP packet (step S101). First, the packet-filtering unit 6 determines whether comparison of the received packet with all the set up IP address blocks is completed (step S102.).

When it is determined that the comparison is not completed (No of step S102), the packet-filtering unit 6 specifies one of the IP address blocks set up by the user as the object of comparison with the received packet (step S103), and determines whether the specified IP address block includes the TLA ignore switch that is valid to ignore the address portion corresponding to the TLA ID, sTLA ID, and NLA ID of the prefix (step S104).

When it is determined that the specified IP address block does not include the TLA ignore switch (No of step S104), the packet-filtering unit 6 performs comparison (matching) of the specified IP address block with the source address of the received IP packet without ignoring the address portion corresponding to the TLA ID, sTLA ID, and NLA ID of the prefix, as in the conventional method (step S105).

When it is determined that the specified IP address block includes the TLA ignore switch (Yes of step S104), the packet-filtering unit 6 performs comparison (matching) of the specified IP address block with the source address of the received IP packet by ignoring the address portion corresponding to the TLA ID, sTLA ID, and NLA ID of the prefix (step S106).

Subsequently, it is determined whether match between the source address of the received IP packet and the specified IP address block occurs (step S107).

When it is determined that the match does not occur (No of step S107), the control is returned to the determination of step S102 as to whether comparison of the received packet with all the set up IP address blocks is completed.

When it is determined that the match occurs (Yes of step S107), the packet-filtering unit 6 determines whether the specified IP address block is set up with the allow-to-access switch to allow communication of the network device with the specified IP address block (step S108).

When it is determined that the specified IP address block is set up without the allow-to-access switch (No of step S108), the packet-filtering unit 6 drops the received IP packet (step S109). On the other hand, when it is determined that the specified IP address block is set up with the allow-to-access switch (Yes of step S108), the packet-filtering unit 6 transmits the received IP packet (step S110). And the processing of FIG. 11 is terminated (step S112).

When it is determined that the comparison of the received packet with all the set up IP address blocks is completed (Yes of step S102), the default processing (for example, access allowance or denial is set up for all the IP addresses that are set up without the access allow/deny switches) is performed (step S111), and the processing of FIG. 11 is terminated (step S112).

In this manner, even when two or more prefixes are distributed in a multi-homing environment and two or more IP addresses are assigned for one network device, what is necessary is just to set up one IP address block for one object of access control without taking into consideration the difference in the address portion corresponding to the TLA ID, sTLA ID, and NLA ID (the varying part) of the prefix. It is possible to perform the access control from the external devices to the network device only by specifying a minimized number of IP address blocks.

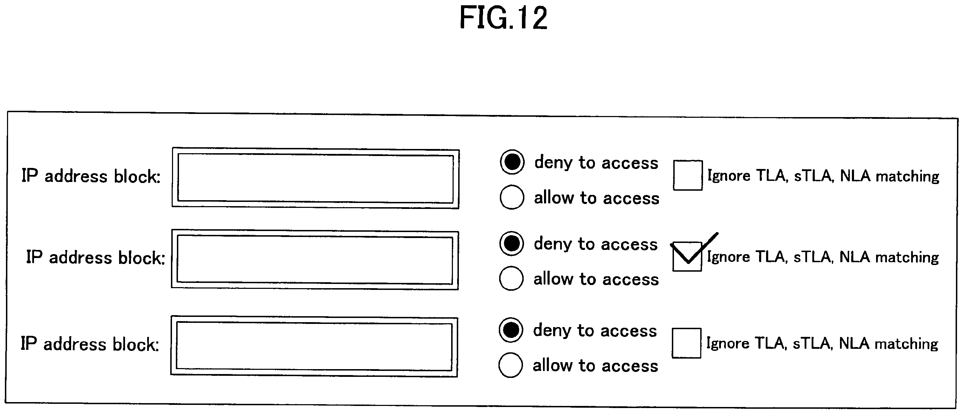

FIG. 12 shows an example of the user interface when the processing of switch control shown in FIG. 8 is not performed.

In the example of FIG. 12, the TLA ignore switch is always displayed for possible selection, irrespective of whether the inputted IP address block is a global unicast address.

However, in this case, the TLA ignore switch may be chosen by the user when the inputted IP address block is not a global unicast address. It is necessary to prevent the user from performing such an unsuitable setup.

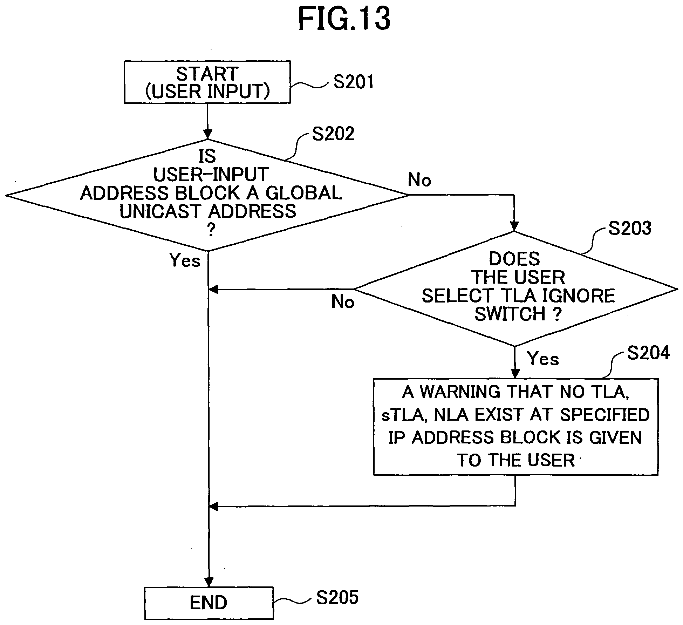

FIG. 13 is a flowchart for explaining the processing to give a warning to a user who has inputted unsuitable setup information.

The processing of FIG. 13 is started when the user starts input operation (step S201). Upon start of the processing, it is determined whether the IP address block inputted by the user is a global unicast address (step S202).

When the user-input IP address block is a global unicast address (Yes of step S202), the processing of FIG. 13 is terminated (step S205).

When the user-input IP address block is not a global unicast address (No of step S202), the access control user-interface unit 4 determines whether the TLA ignore switch is selected for the IP address block by the user (step S203).

When the TLA ignore switch is not selected (No of step S203), the processing of FIG. 13 is terminated (step S205). When the TLA ignore switch is selected (Yes of step S203), the access control user-interface unit 4 gives the user a warning indicating that an unsuitable setup is performed by the user and the TLA ignore switch cannot be selected (step S204), and the processing is terminated (step S205).

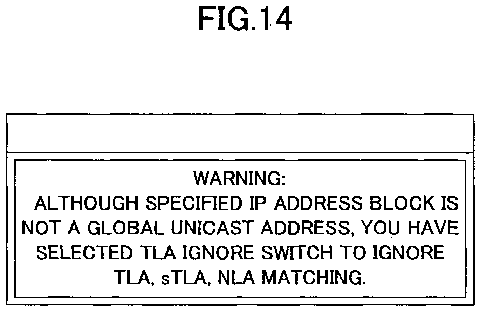

FIG. 14 shows an example of a warning message. As shown in FIG. 14, this warning gives the user a message indicating that "although the specified IP address block is not a global unicast address, the user has selected the TLA ignore switch to ignore TLA, sTLA, and NLA matching". Thereby, it is possible to prevent the security from being lowered due to a setting error by the user.

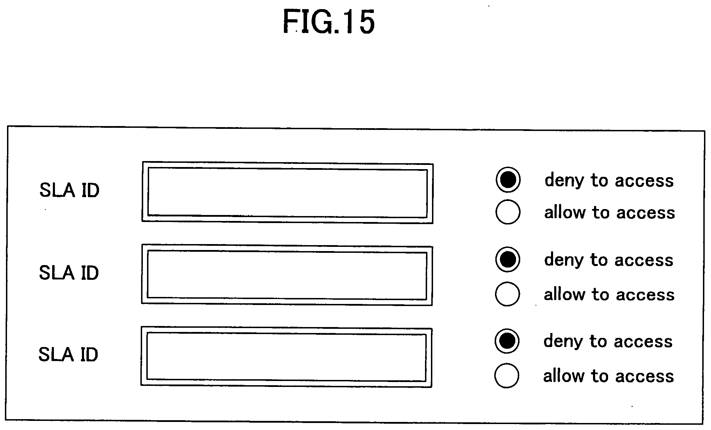

FIG. 15 shows an example of the user interface when SLA ID is directly set up. As shown in FIG. 15, the user interface includes an address input part of SLA ID (or the user-dependent fixed part of the prefix), and an allow/deny selection part to which a choice of whether access to the network device from an external device is allowed or denied is inputted. This user interface is adapted for the user to easily perform an access control operation when the device administrator recognizes the request for multi-homing environment.

Namely, even when two or more prefixes are distributed in a multi-homing environment and two or more IP addresses are assigned for one device, an IP address with the same SLA ID can be identified as the same category, and the redundant access-control setup operation can be omitted.

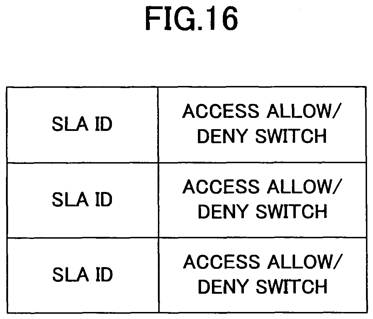

FIG. 16 shows an example of the setup information stored. As shown in FIG. 16, the setup information stored in the network device 1 includes the SLA ID and the access allow/deny switch (1 bit).

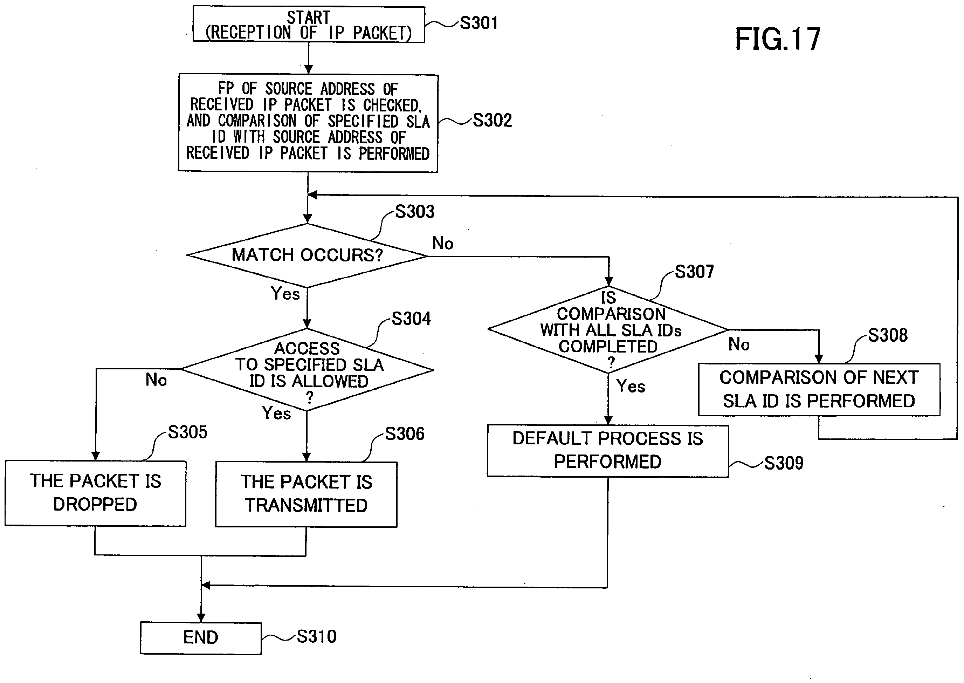

FIG. 17 is a flowchart for explaining the processing performed by the packet-filtering unit 6 when SLA ID is directly set up.

The processing of FIG. 17 is started when an IP packet is received (step S301). Upon start of the processing of FIG. 17, the packet-filtering unit 6 checks that the FP of the source address of the received IP packet is equal to a predetermined value (0) which indicates a global unicast address, and performs comparison (matching) of the SLA ID of the source address of the received IP packet with the SLA ID specified by the user (step S302).

Subsequently, the packet-filtering unit 6 determines whether a match occurs (step S303). When the match occurs (Yes of step S303), the packet-filtering unit 6 determines whether the specified SLA ID is set up with the allow-to-access switch (step S304). When it is determined that the specified SLA ID is set up without the allow-to-access switch (No of step 304), the packet-filtering unit 6 drops the received IP packet (step S305), and the processing of FIG. 17 is terminated (step S310).

When it is determined that the specified SLA ID is set up with the allow-to-access switch (Yes of step S304), the packet-filtering unit 6 transmits the received IP packet (step S306), and the processing of FIG. 17 is terminated (step S310).

On the other hand, when it is determined that the SLA ID of the source address of the received IP packet does not match with the SLA ID specified by the user (No of step S303), the packet-filtering unit 6 determines whether comparison of the received IP packet with all the set up SLA IDs is completed (step S307). When the comparison is not yet completed (No of step S307), the packet-filtering unit 6 performs comparison of the received IP packet with next SLA ID set up by the user (step S308). And the control is returned to the determination of match (step S303).

When the comparison with all the set up SLA IDs is completed (Yes of step S303), the packet-filtering unit 6 performs the default processing (step S309), and the processing of FIG. 17 is terminated (step S310).

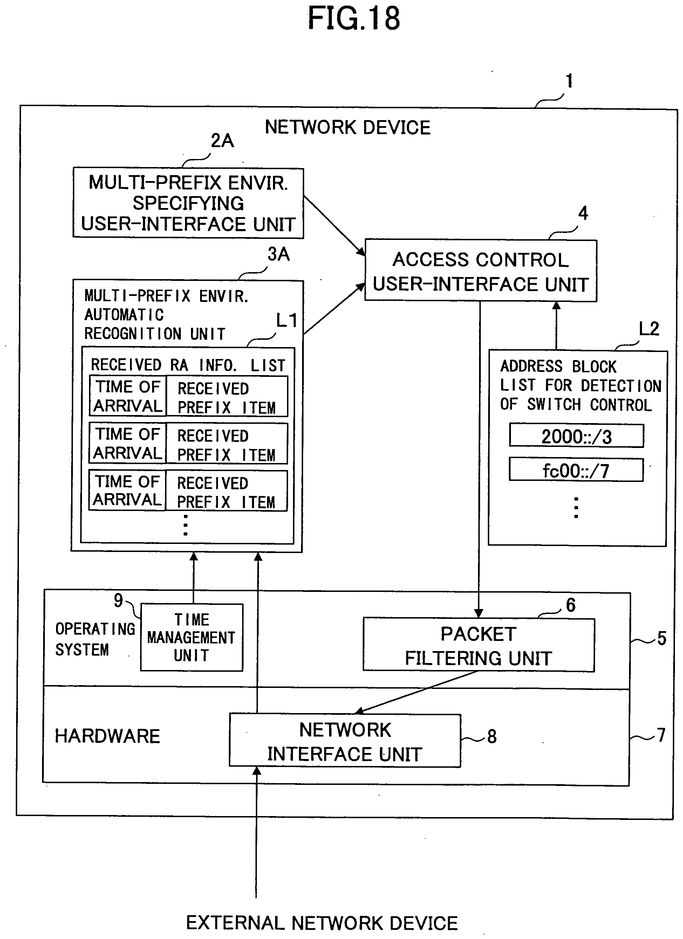

FIG. 18 shows the composition of a network device 1 in an embodiment of the invention. This embodiment is applied to more general multi-prefix environment including multi-homing environment.

As shown in FIG. 18, the network device 1 includes the following elements. A multi-prefix environment specifying user-interface unit 2A is provided to receive a manually input command to set the current condition of the network device is in a multi-prefix environment or not.

A multi-prefix environment automatic recognition unit 3A is provided to automatically detect whether the current condition of the network device is in a multi-prefix environment.

An access control user-interface unit 4 is provided to create a user interface for the access control according to the recognized environment (multi-prefix environment/non-multi-prefix environment) from the multi-prefix environment specifying user-interface unit 2A or the multi-prefix environment automatic recognition unit 3A.

In the multi-prefix environment automatic recognition unit 3A, a received RA (router advertisement) information list L1 which holds items of received RA information (which is stored on the basis of a pair of a time of arrival and a received prefix item) received from the network is provided.

Upon start of the processing, the access control user-interface unit 4 determines whether the inputted address is a global unicast address, and has access to an address block list L2 for detection of switch control for controlling the TLA ignore switch.

This address block list L2 for switch control detection is set up beforehand at the time of manufacture or maintenance of the network device 1, and it can be updated flexibly in response to changes to the specifications of IPv6 (the bits for identifying a global unicast address or the like).

An operating system (OS) 5 of the network device 1 includes a packet-filtering unit 6 which filters the incoming IP packet from an external network device according to the information which is set up by the user through the user interface created by the access control user-interface unit 4. The operating system 5 includes a time management unit 9 which supplies the current time to the multi-prefix environment automatic recognition unit 3A.

Hardware 7 of the network device 1 includes a network interface part 8 which performs reception of the IP packet under the control of the packet-filtering unit 6. The packet received by the network interface part 8 is supplied to the multi-prefix environment automatic recognition unit 3A, in order to detect whether the current condition of the network device 1 is in a multi-prefix environment.

The processing of access control setup performed by the device administrator M2 with the network device 1 is essentially the same as that described above with reference to FIG. 6 (except for the term "multi-homing environment" being replaced by "multi-prefix environment").

Namely, the processing performed by the device administrator M2 with the network device 1 includes the recognition of multi-prefix environment in the network device 1 (step S1), the access control user-interface request to the network device 1 from the device administrator M2 (step S2), the access control user-interface creation in the network device 1 (step S3), the address selection from the device administrator M2 to the network device 1 (step S4), the switch control in the network device 1 (step S5), the access allowance/denial setup and the switch setup to the network device 1 from the device administrator M2 (step S6), and the packet-filtering unit setup in the network device 1 (step S7), sequentially in this order.

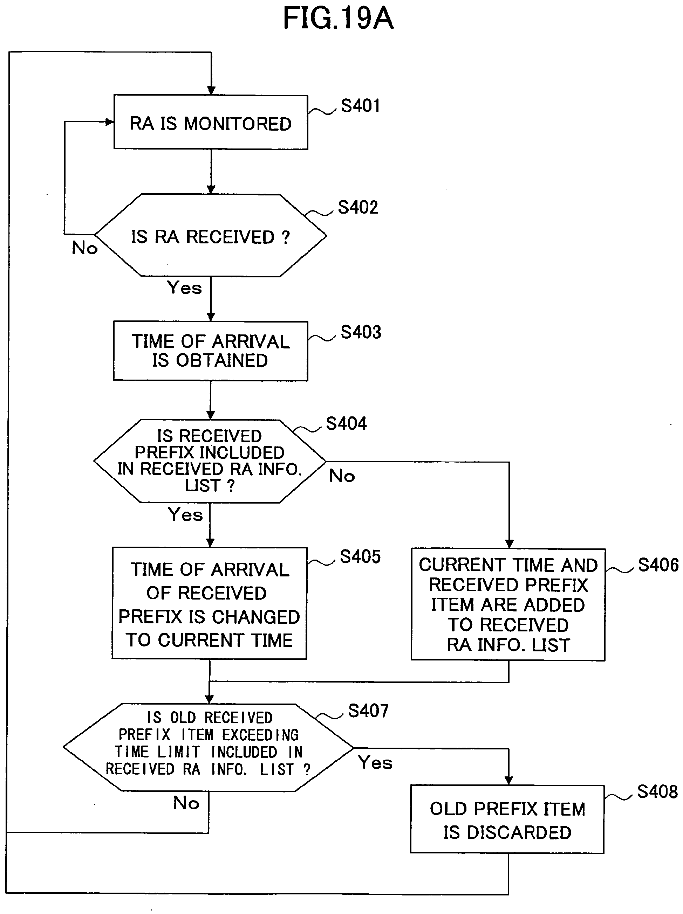

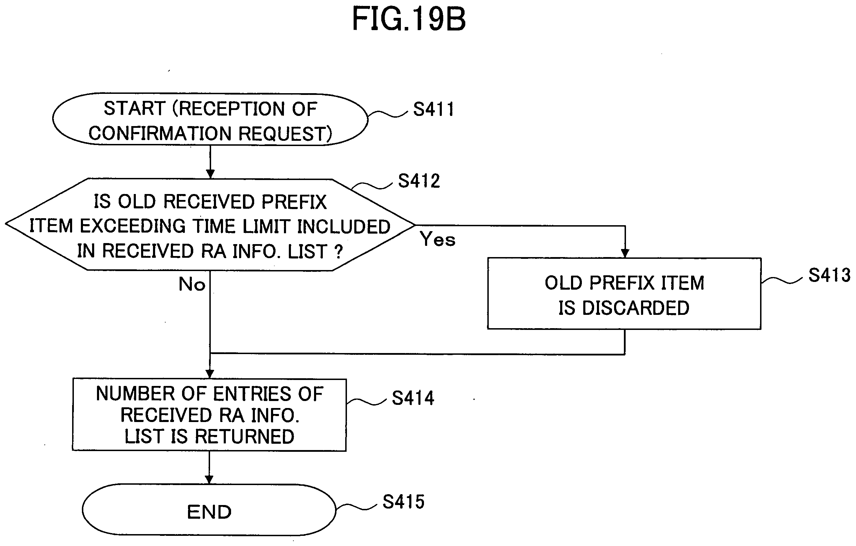

FIG. 19A and FIG. 19B show the processing performed by the multi-prefix environment automatic recognition unit 3A of this embodiment. FIG. 19A is a flowchart for explaining a steady monitoring process. FIG. 19B is a flowchart for explaining the answer processing performed in response to a confirmation request (mainly from the access control user-interface unit 4).

As shown in FIG. 19A, the multi-prefix environment automatic recognition unit 3A monitors a router advertisement (RA) from the network via the network interface part 8 (step S401), and determines whether the RA is received or not (step S402).

When any RA is not received (No of step S402), the control is returned to the RA monitoring step S401.

When an RA is received (Yes of step S402), the multi-prefix environment automatic recognition unit 3A obtains the current time from time management unit 9 (step S403).

Subsequently, the multi-prefix environment automatic recognition unit 3A determines whether the prefix (the received prefix) included in the received RA is included in the received RA information list L1 (step S404).

When the received prefix is included in the list L1 (Yes of step S404), the time of arrival of the corresponding prefix item in the received RA information list L1 is changed to the current time obtained from the time management unit 9 (step S405).

When the received prefix is not included in the received RA information list L1 (No of step S404), the received prefix and the current time are added to the received RA information list L1 (step S406).

Subsequently, the multi-prefix environment automatic recognition unit 3A has access to the time of arrival of each of the received prefix items in the received RA information list L1, and determines whether an old prefix item with its time of arrival exceeding a given time limit is included in the list L1 (step S407). When the old prefix item is included (Yes of step S407), the multi-prefix environment automatic recognition unit 3A discards the corresponding received prefix item in the list L1 (step S408), and the control is returned to the RA monitoring step S401.

When the old prefix item exceeding the given time limit is not included (No of step S407), the control is returned to the RA monitoring step S401.

In this embodiment, the received prefix items each including the time of arrival are managed in the received RA information list L1, and an old prefix item exceeding the given time limit is discarded from the list L1. Thus, it is possible for this embodiment to prevent erroneous recognition of multi-prefix environment in the network device 1 due to use of the old prefix item exceeding the given time limit. This mechanism is applicable also to the processing of FIG. 5 and the processing of FIG. 7 mentioned above.

The processing shown in FIG. 19B is started when a confirmation request from an external unit is received at the multi-prefix, environment automatic recognition unit 3A (step S411). Upon start of the processing, the multi-prefix environment automatic recognition unit 3A determines whether an old prefix item exceeding a given time limit is included in the received RA information list L1 by having access to the time of arrival of each prefix item in the received RA information list L1 (step S412).

When the old prefix item exceeding the time limit is included (Yes of step S412), the corresponding prefix item is discarded (step S413). In this embodiment, checking of existence of the old prefix item exceeding the time limit and discarding of the old prefix item are performed upon reception of the confirmation request. This is because the processing of FIG. 19A performs checking of existence of the old prefix item exceeding the time limit and discarding of the old prefix item only at the time of reception of the prefix, and the old prefix item may remain in the list L1 when no RA is received.

Subsequently, the multi-prefix environment automatic recognition unit 3A returns the number of entries of the received prefixes in the received RA information list L1 to the requesting external unit (step S414), and the processing of FIG. 19 is terminated (step S415).

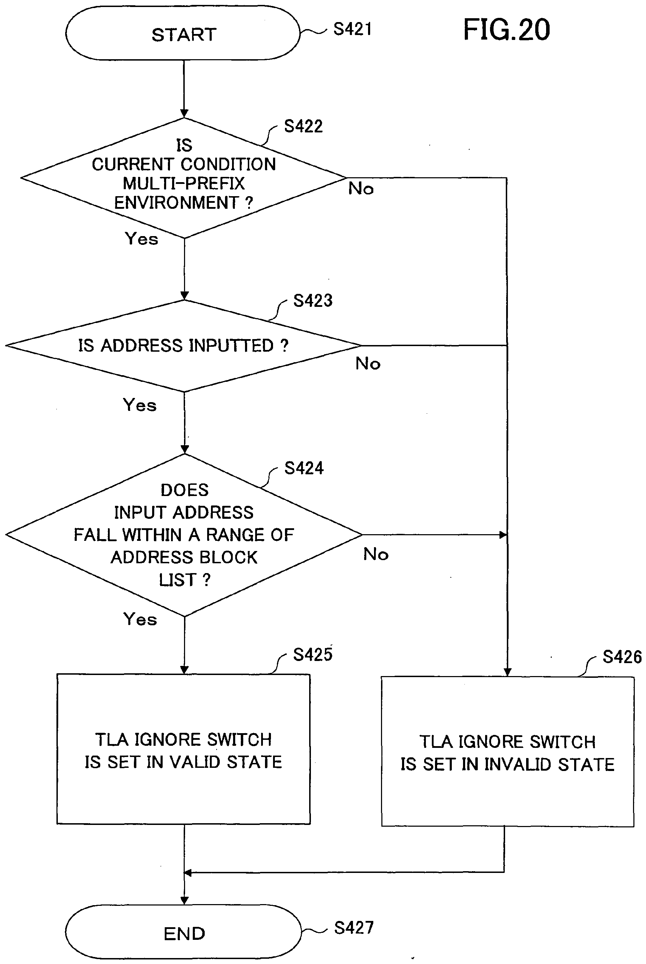

FIG. 20 is a flowchart for explaining the processing of switch control performed by the access control user-interface unit 4 of this embodiment. Suppose that the user interface in this embodiment is the same as that shown in FIG. 9.

As shown in FIG. 20, the processing is started when the access control user-interface unit 4 receives any input operation to the user interface (character input, button selection, etc.) or focus movement (selecting part movement) being performed as a start trigger (step S421).

Upon start of the processing, the access control user-interface unit 4 determines whether the current condition of the network device 1 is in a multi-prefix environment, by sending a confirmation request to and receiving a response from the multi-prefix environment automatic recognition unit 3A (step S422).

When it is determined that the current condition is in a multi-prefix environment (Yes of step S422), the access control user-interface unit 4 determines whether the user has inputted the IP address (including the IP address block accompanied by "/") (step S423).

When the address is inputted by the user (Yes of step S423), the access control user-interface unit 4 determines whether the inputted address falls within the range of the IP address block set up in the address block list L2 for switch control detection (step S424).

When the inputted address falls within the range of the IP address block set up in the address block list L2 for switch control detection (Yes of step S424), this shows that the inputted address is an effective global unicast address. In this case, the access control user-interface unit 4 sets the TLA ignore switches of the user interface in a valid state (step S425). And the processing of FIG. 20 is terminated (step S427).

When the current condition is determined as not being in a multi-prefix environment (No of step S422), when the address is not inputted by the user (No of step S423), or when the inputted address does not fall within the range of the IP address block set up in the address block list L2 for switch control detection (No of step S424), the access control user-interface unit 4 sets the TLA ignore switches of the user interface in an invalid state (step S426). And the processing of FIG. 20 is terminated (step S427).

Alternatively, if the determination (step S422) as to whether the current condition is in a multi-prefix environment and the determination (step S424) as to whether the inputted address falls within the range of the IP address block set up in the address block list L2 for switch control detection are omitted in the example of FIG. 20, the TLA ignore switches of the user interface may be set in a valid state immediately after the address is inputted by the user. In such alternative embodiment, the access control only depending on the SLA IDs assigned for the respective company sections can be specified irrespective of whether the current condition of the network device is in a multi-prefix environment.

## Claims

1. A network device (1) configured to perform an access control to the network device (1) from an external device via a network by setting of allowance or denial of access to the network device (1) from a predetermined IPv6 address, comprising:
a user-interface unit (4) for storing set-up information input by a user including IPv6 address information specifying an IPv6 address or an IPv6 address range, allow/deny information specifying a choice of whether access to the network device (1) from an external device, corresponding to the IPv6 address information, is allowed or denied, and prefix-ignore information specifying a choice of whether an IPv6 address portion corresponding to a varying part of an IPv6 address prefix, comprising a top level aggregation identifier, a sub top level identifier, and a next level aggregation identifier, received from the network is ignored or not ignored; and
a packet-filtering unit (6) for determining allowance or denial of reception of an incoming packet according to the set-up information; and
a multi-prefix environment recognition unit (3A) for detecting whether the network device (1) is in a multi-prefix environment,
wherein the user-interface unit (4) is configured to set the prefix-ignore information based on a result of the detection by the multi-prefix environment recognition unit (3A), such that the user-interface unit (4) is configured to set the prefix-ignore information to specify that the varying part of the prefix is ignored when the IPv6 address input by the user is a global unicast address and the network device (1) is in a multi-prefix environment.

2. The network device (1) according to claim 1, wherein the multi-prefix environment recognition unit (3A) is configured to monitor a router advertisement received from the network, and detect that the network device (1) is in a multi-prefix environment when a plurality of prefixes are contained in the received router advertisement.

3. The network device (1) according to claim 2, wherein the multi-prefix environment recognition unit (3A) is configured to hold an manage a plurality of prefixes in the received router advertisement on the basis of a pair of a prefix item and a time of arrival thereof, and discard an old prefix item exceeding a given time limit in the plurality of prefixes.

4. The network device (1) according to claim 3, wherein the multi-prefix environment recognition unit (3A) is configured to return the number of entries of currently held prefixes in response to a confirmation request from the user-interface unit (4).

5. The network device (1) according to any one of claims 1 to 4, wherein the user-interface unit (4) is configured to give the user a warning indicating that an unsuitable setup is performed by the user, when the choice to ignore the address portion corresponding to the varying part of the prefix received from the network is input but the IPv6 address input by the user is not a global unicast address.

6. The network device (1) according to claim 1 or 5, wherein the user-interface unit (4) is configured to determine whether the IPv6 address input by the user is a global unicast address, based on a value of predetermined bits at a head end of the IPv6 address.

7. The network device according to claim 1 or 5, wherein the user-interface unit (4) is configured to determine whether the IPv6 address input by the user is a global unicast address, depending on whether the input IPv6 address is within a range of a predetermined address block.

8. An access control method which performs an access control to a network device from an external device via a network by setting of allowance or denial of access to the network device from a predetermined address, the method comprising steps of:
storing set-up information input by a user including IPv6 address information specifying an IPv6 address or an IPv6 address range, allow/deny information specifying a choice of whether access to the network device from an external device, corresponding to the IPv6 address information, is allowed or denied, and prefix ignore information specifying a choice of whether an IPv6 address portion corresponding to a varying part of a prefix, comprising a top level aggregation identifier, a sub top level identifier, and a next level aggregation identifier, received from the network is ignored or not ignored; and
determining allowance or denial of reception of an incoming packet according to set-up information; and
detecting whether the network device is in a multi-prefix environment;
wherein the step of storing setup information comprises setting the prefix-ignore information based on a result of the detection in the step of detecting the multi-prefix environment, such that the prefix-ignore information is set to specify that the varying part of the prefix is ignored when the IPv6 address input by the user is a global unicast address and the network device is in a multi-prefix environment.

9. The access control method according to claim 8, wherein the step of detecting the multi-prefix environment comprises monitoring a router advertisement received from the network, and detecting that the network device is in a multi-prefix environment when a plurality of prefixes are contained in the received router advertisement.

10. The access control method according to claim 9, wherein the step of detecting the multi-prefix environment comprises holding and managing a plurality of prefixes in the received router advertisement on the basis of a pair of a prefix item and a time of arrival thereof, and discarding an old prefix item exceeding a given time limit in the plurality of prefixes.

11. The access control method according to claim 10, wherein the step of detecting the multi-prefix environment comprises returning the number of entries of currently held prefixes in response to a confirmation request.

12. The access control method according to any one of claims 8 to 11, wherein the step of storing the set-up information comprises giving the user a warning indicating that an unsuitable setup is performed by the user, when the choice to ignore the address portion corresponding to the varying part of the prefix received from the network is inputted but the IPv6 address input by the user is not a global unicast address.

13. The access control method according to claim 11 or 12, wherein the step of storing the setup information comprises determining whether the IPv6 address input by the user is a global unicast address, based on a value of predetermined bits at a head end of the IPv6 address.

14. The access control method according to claim 11 or 12, wherein the step of storing the setup information comprises determining whether the IPv6 address input by the user is a global unicast address, depending on whether the input address is within a range of a predetermined address block.

## Patentansprüche

1. Netzwerkvorrichtung (1), konfiguriert, eine Zugriffskontrolle für die Netzwerkvorrichtung (1) von einer externen Vorrichtung über ein Netzwerk durch das Einstellen einer Erlaubnis oder Ablehnung des Zugriffs zur Netzwerkvorrichtung (1) von einer festgelegten IPv6-Adresse auszuführen,
umfassend:
eine Benutzerschnittstelleneinheit (4) zum Speichern von Einrichtungsinformationen, die von einem Benutzer eingegeben werden, einschließlich IPv6-Adressinformationen, die eine IPv6-Adresse oder einen IPv6-Adressbereich spezifizieren, Erlauben/Ablehnen von Informationen, die eine Wahl spezifizieren, ob ein Zugriff zur Netzwerkvorrichtung (1) von einer externen Vorrichtung, entsprechend der IPv6-Informationen, erlaubt oder abgelehnt wird, und
Präfix-Ignorier-Informationen, die eine Wahl spezifizieren, ob ein IPv6-Adressenabschnitt, der einem abweichenden Teil eines IPv6-Adressenpräfixes entspricht, umfassend eine Aggregationskennung der oberen Ebene, eine Subkennung der oberen Ebene und eine Aggregationskennung der nächsten Ebene, empfangen vom Netzwerk, ignoriert oder nicht ignoriert wird; und
eine Paket-filternde Einheit (6) zum Bestimmen des Erlaubens oder Ablehnens des Empfangs eines eingehenden Pakets gemäß der Einrichtungsinformationen; und
eine Multi-Präfix-Umgebungserkennungseinheit (3A) zum Erfassen, ob sich die Netzwerkvorrichtung (1) in einer Multi-Präfix-Umgebung befindet,
wobei die Benutzerschnittstelleneinheit (4) konfiguriert ist, die Präfix-Ignorier-Informationen beruhend auf einem Ergebnis der Erfassung durch die Multi-Präfix-Umgebungserkennungseinheit (3A) einzustellen, sodass die Benutzerschnittstelleneinheit (4) konfiguriert ist, die Präfix-Ignorier-Informationen einzustellen, zu spezifizieren, dass der abweichende Teil des Präfixes ignoriert wird, wenn die IPv6-Adresseneingabe durch den Benutzer eine globale Unicast-Adresse und die Netzwerkvorrichtung (1) eine Multi-Präfix-Umgebung ist.

2. Netzwerkvorrichtung (1) nach Anspruch 1, wobei die Multi-Präfix-Umgebungserkennungseinheit (3A) konfiguriert ist, eine vom Netzwerk empfangene Router-Anzeige zu überwachen und zu erfassen, dass die Netzwerkvorrichtung (1) eine Multi-Präfix-Umgebung ist, wenn eine Vielzahl von Präfixen in der empfangenen Router-Anzeige enthalten sind.

3. Netzwerkvorrichtung (1) nach Anspruch 2, wobei die Multi-Präfix-Umgebungserkennungseinheit (3A) konfiguriert ist, eine Vielzahl von Präfixe in der empfangenen Router-Anzeige auf der Grundlage eines Paars eines Präfixelements und einer Ankunftszeit dessen zu halten und verwalten und ein altes Präfixelement zu entsorgen, das ein gegebenes Zeitlimit in der Vielzahl von Präfixen überschreitet.

4. Netzwerkvorrichtung (1) nach Anspruch 3, wobei die Multi-Präfix-Umgebungserkennungseinheit (3A) konfiguriert ist, die Anzahl von Einträgen von derzeitig gehaltenen Präfixen in Reaktion aus eine Bestätigungsanfrage von der Benutzerschnittstelleneinheit (4) zurückzuschicken.

5. Netzwerkvorrichtung (1) nach einem der Ansprüche 1 bis 4, wobei die Benutzerschnittstelleneinheit (4) konfiguriert ist, dem Benutzer eine Warnung zu geben, die anzeigt, dass eine ungeeignete Einrichtung vom Benutzer ausgeführt wird, wenn die Wahl, den Adressenabschnitt, der dem abweichenden Teil des vom Netzwerk empfangenen Präfixes entspricht, zu ignorieren, eingegeben wird, die IPv6-Adresseneingabe vom Benutzer aber keine globale Unicast-Adresse ist.

6. Netzwerkvorrichtung (1) nach Anspruch 1 oder 5, wobei die Benutzerschnittstelleneinheit (4) konfiguriert ist, zu bestimmen, ob die vom Benutzer eingegebene IPv6-Adresse eine globale Unicast-Adresse ist, beruhend auf einem Wert festgelegter Bits an einem Kopfende der IPv6-Adresse.

7. Netzwerkvorrichtung (1) nach Anspruch 1 oder 5, wobei die Benutzerschnittstelleneinheit (4) konfiguriert ist, zu bestimmen, ob die vom Benutzer eingegebene IPv6-Adresse eine globale Unicast-Adresse ist, abhängig davon, ob die IPv6-Adresse innerhalb eines Bereichs eines festgelegten Adressenblocks liegt.

8. Zugriffskontrollverfahren, das eine Zugriffskontrolle für eine Netzwerkvorrichtung von einer externern Vorrichtung über ein Netzwerk durch das Einsrichten einer Erlaubnis oder Ablehnung des Zugriffs zur Netzwerkvorrichtung von einer festgelegten Adresse aus ausführt, wobei das Verfahren die folgenden Schritte umfasst:
Speichern von Einrichtungsinformationen, die von einem Benutzer eingegeben werden, einschließlich IPv6-Adressinformationen, die eine IPv6-Adresse oder einen IPv6-Adressenbereich spezifizieren, Erlauben/Ablehnen von Informationen, die eine Wahl spezifizieren, ob ein Zugriff zur Netzwerkvorrichtung von einer externen Vorrichtung, entsprechend der IPv6-Informationen, erlaubt oder abgelehnt wird, und
Präfix-Ignorier-Informationen, die eine Wahl spezifizieren, ob ein Adressenabschnitt, der einem abweichenden Teil eines IPv6-Präfixes entspricht, umfassend eine Aggregationskennung der oberen Ebene, eine Subkennung der oberen Ebene und eine Aggregationskennung der nächsten Ebene, empfangen vom Netzwerk, ignoriert oder nicht ignoriert wird; und
Bestimmen einer Erlaubnis oder Ablehnung des Empfangs eines eingehenden Pakets gemäß den Einrichtungsinformationen; und
Erfassen, ob sich die Netzwerkvorrichtung in einer Multi-Präfix-Umgebung befindet;
wobei
der Schritt des Speicherns von Einrichtungsinformationen das Einrichten der Präfix-Ignorier-Informationen beruhend aus einem Ergebnis der Erfassung im Schritt des Erfassens der Multi-Präfix-Umgebung umfasst, sodass die Präfix-Ignorier-Informationen so eingestellt sind, dass sie spezifizieren, dass der abweichende Teil des Präfixes ignoriert wird, wenn die vom Benutzer eingegebene IPv6-Adresse eine globale Unicast-Adresse ist und die Netzwerkvorrichtung sich in einer Multi-Präfix-Umgebung befindet.

9. Zugriffskontrollverfahren nach Anspruch 8, wobei der Schritt des Erfassens der Multi-Präfix-Umgebung das Überwachen einer vom Netzwerk empfangenen Router-Anzeige und das Erfassen umfasst, dass sich die Netzwerkvorrichtung in einer Multi-Präfix-Umgebung befindet, wenn eine Vielzahl von Präfixen in der empfangenen Router-Anzeige enthalten sind.

10. Zugriffskontrollverfahren nach Anspruch 9, wobei der Schritt des Erfassens der Multi-Präfix-Umgebung das Halten und Verwalten einer Vielzahl von Präfixen in der empfangenen Router-Anzeige auf der Grundlage eines Paars von Präfixelementen und einer Ankunftszeit dessen und das Entsorgen eines alten Präfixelements umfasst, das ein gegebenes Zeitlimit in der Vielzahl von Präfixen überschreitet.

11. Zugriffskontrollverfahren nach Anspruch 10, wobei der Schritt des Erfassens der Multi-Präfix-Umgebung das Zurückschicken der Anzahl von Einträgen der derzeitig gehaltenen Präfixe in Reaktion auf eine Bestätigungsanfrage umfasst.

12. Zugriffskontrollverfahren nach einem der Ansprüche 8 bis 11, wobei der Schritt des Speicherns der Einrichtungsinformationen das Geben einer Warnung an den Benutzer umfasst, die anzeigt, dass eine ungeeignete Einrichtung vom Benutzer ausgeführt wird, wenn die Wahl, den Adressabschnitt, der dem abweichenden Teil des vom Netzwerk empfangenen Präfixes entspricht, eingegeben wird, die vom Benutzer eingegebene IPv6-Adresse aber keine globale Unicast-Adresse ist.

13. Zugriffskontrollverfahren nach Anspruch 11 oder 12, wobei der Schritt des Speicherns der Einrichtungsinformationen das Bestimmen umfasst, ob die vom Benutzer eingegeben IPv6-Adresse eine globale Unicast-Adresse ist, beruhend auf einem Wert festgelegter Bits an einem Kopfende der IPv6-Adresse.

14. Zugriffskontrollverfahren nach Anspruch 11 oder 12, wobei der Schritt des Speicherns der Einrichtungsinformationen das Bestimmen umfasst, ob die vom Benutzer eingegeben IPv6-Adresse eine globale Unicast-Adresse ist, abhängig davon, ob sich die eingegebene Adresse in einem Bereich eines festgelegten Adressenblocks befindet.

## Revendications

1. Dispositif en réseau (1) conçu pour effectuer le contrôle de l'accès, par un périphérique externe, audit dispositif en réseau (1) au sein d'un réseau, en établissant une autorisation ou un refus d'accès au dispositif en réseau (1) à partir d'une adresse IPv6 prédéterminée, comprenant :
une unité d'interface utilisateur (4) destinée à stocker des informations de paramétrage entrées par un utilisateur, comprenant des informations d'adresse IPv6 spécifiant une adresse IPv6 ou une plage d'adresses IPv6, des informations d'autorisation ou de refus spécifiant un choix selon lequel l'accès au dispositif en réseau (1), par un périphérique externe correspondant aux informations d'adresse IPv6, est autorisé ou refusé, et des informations de prise en compte ou non du préfixe spécifiant un choix selon lequel une partie d'adresse IPv6 correspondant à une partie variable d'un préfixe d'adresse IPv6, comprenant un identifiant d'agrégateur de niveau supérieur (TLA, Top level aggregator), un identifiant de sous-TLA et un identifiant d'agrégateur de niveau suivant (NLA, Next level aggregator), reçue en provenance du réseau est ignorée ou non ; et
une unité de filtrage de paquets (6) destinée à déterminer l'autorisation ou le refus de la réception d'un paquet entrant, en fonction des informations de paramétrage ; et
une unité de reconnaissance d'environnement à plusieurs préfixes (3A) destinée à détecter si le dispositif en réseau (1) se trouve dans un environnement à plusieurs préfixes ou non ;
l'unité d'interface utilisateur (4) étant conçue pour établir les informations de prise en compte ou non du préfixe en fonction du résultat de la détection réalisée par l'unité de reconnaissance d'environnement à plusieurs préfixes (3A) de manière que l'unité d'interface utilisateur (4) est conçue pour établir des informations de prise en compte ou non du préfixe qui spécifient d'ignorer la partie variable du préfixe lorsque l'adresse IPv6 entrée par l'utilisateur est une adresse unicast globale et que le dispositif en réseau (1) se trouve dans un environnement à plusieurs préfixes.

2. Dispositif en réseau (1) selon la revendication 1, dans lequel l'unité de reconnaissance d'environnement à plusieurs préfixes (3A) est conçue pour surveiller une annonce de routeur reçue en provenance du réseau, et pour détecter que le dispositif en réseau (1) se trouve dans un environnement à plusieurs préfixes lorsqu'une pluralité de préfixes sont contenus dans l'annonce de routeur reçue.

3. Dispositif en réseau (1) selon la revendication 2, dans lequel l'unité de reconnaissance d'environnement à plusieurs préfixes (3A) est conçue pour retenir et gérer une pluralité de préfixes contenus dans l'annonce de routeur reçue, en fonction d'une paire constituée d'un élément de préfixe et du moment d'arrivée de celui-ci, et pour rejeter un ancien élément de préfixe dépassant une limite de temps donnée parmi la pluralité de préfixes.

4. Dispositif en réseau (1) selon la revendication 3, dans lequel l'unité de reconnaissance d'environnement à plusieurs préfixes (3A) est conçue pour retourner le nombre d'entrées de préfixes actuellement retenus, en réponse à une demande de confirmation de la part de l'unité d'interface utilisateur (4).

5. Dispositif en réseau (1) selon l'une quelconque des revendications 1 à 4, dans lequel l'unité d'interface utilisateur (4) est conçue pour communiquer à l'utilisateur un avertissement indiquant qu'un paramétrage inadapté est effectué par l'utilisateur lorsque le choix d'ignorer la partie d'adresse correspondant à la partie variable du préfixe reçue en provenance du réseau est entré mais que l'adresse IPv6 entrée par l'utilisateur n'est pas une adresse unicast globale.

6. Dispositif en réseau (1) selon la revendication 1 ou 5, dans lequel l'unité d'interface utilisateur (4) est conçue pour déterminer si l'adresse IPv6 entrée par l'utilisateur est une adresse unicast globale, en fonction de la valeur de bits prédéterminés à une extrémité de tête de l'adresse IPv6.

7. Dispositif en réseau selon la revendication 1 ou 5, dans lequel l'unité d'interface utilisateur (4) est conçue pour déterminer si l'adresse IPv6 entrée par l'utilisateur est une adresse unicast globale ou non, selon que l'adresse IPv6 entrée se situe dans une plage d'un bloc d'adresse prédéterminé.

8. Procédé de contrôle d'accès qui effectue un contrôle de l'accès, par un périphérique externe, à un dispositif en réseau, au sein d'un réseau, en établissant une autorisation ou un refus d'accès au dispositif en réseau à partir d'une adresse prédéterminée, le procédé comprenant les étapes consistant à :
stocker des informations de paramétrage entrées par un utilisateur, comprenant des informations d'adresse IPv6 spécifiant une adresse IPv6 ou une plage d'adresses IPv6, des informations d'autorisation ou de refus spécifiant un choix selon lequel l'accès au dispositif en réseau, par un périphérique externe correspondant aux informations d'adresse IPv6, est autorisé ou refusé, et des informations de prise en compte ou non du préfixe spécifiant un choix selon lequel une partie d'adresse IPv6 correspondant à une partie variable d'un préfixe, comprenant un identifiant d'agrégateur de niveau supérieur (TLA, Top level aggregator), un identifiant de sous-TLA et un identifiant d'agrégateur de niveau suivant (NLA, Next level aggregator), reçue en provenance du réseau est ignorée ou non ; et
déterminer l'autorisation ou le refus de la réception d'un paquet entrant, en fonction des informations de paramétrage ; et
détecter si le dispositif en réseau se trouve dans un environnement à plusieurs préfixes ou non ;
l'étape de stockage d'informations de paramétrage comprenant l'établissement des informations de prise en compte ou non du préfixe en fonction du résultat de la détection, réalisée au cours de l'étape de détection de l'environnement à plusieurs préfixes, de manière que les informations de prise en compte ou non du préfixe sont établies pour spécifier d'ignorer la partie variable du préfixe lorsque l'adresse IPv6 entrée par l'utilisateur est une adresse unicast globale et que le dispositif en réseau se trouve dans un environnement à plusieurs préfixes.

9. Procédé de contrôle d'accès selon la revendication 8, dans lequel l'étape de détection de l'environnement à plusieurs préfixes comprend la surveillance d'une annonce de routeur reçue en provenance du réseau, et la détection du fait que le dispositif en réseau se trouve dans un environnement à plusieurs préfixes lorsqu'une pluralité de préfixes sont contenus dans l'annonce de routeur reçue.

10. Procédé de contrôle d'accès selon la revendication 9, dans lequel l'étape de détection de l'environnement à plusieurs préfixes comprend la retenue et la gestion d'une pluralité de préfixes contenus dans l'annonce de routeur reçue, en fonction d'une paire constituée d'un élément de préfixe et du moment d'arrivée de celui-ci, et le rejet d'un ancien élément de préfixe dépassant une limite de temps donnée parmi la pluralité de préfixes.

11. Procédé de contrôle d'accès selon la revendication 10, dans lequel l'étape de détection de l'environnement à plusieurs préfixes comprend le retour du nombre d'entrées de préfixes actuellement retenus, en réponse à une demande de confirmation.

12. Procédé de contrôle d'accès selon l'une quelconque des revendications 8 à 11, dans lequel l'étape de stockage des informations de paramétrage comprend la communication, à l'utilisateur, d'un avertissement indiquant qu'un paramétrage inadapté est effectué par l'utilisateur, lorsque le choix d'ignorer la partie d'adresse correspondant à la partie variable du préfixe reçue en provenance du réseau est entré mais que l'adresse IPv6 entrée par l'utilisateur n'est pas une adresse unicast globale.

13. Procédé de contrôle d'accès selon la revendication 11 ou 12, dans lequel l'étape de stockage des informations de paramétrage comprend la détermination de savoir si l'adresse IPv6 entrée par l'utilisateur est une adresse unicast globale, en fonction de la valeur de bits prédéterminés à une extrémité de tête de l'adresse IPv6.

14. Procédé de contrôle d'accès selon la revendication 11 ou 12, dans lequel l'étape de stockage des informations de paramétrage comprend la détermination de savoir si l'adresse IPv6 entrée par l'utilisateur est une adresse unicast globale ou non, selon que l'adresse entrée se situe dans une plage d'un bloc d'adresse prédéterminé.
